**Europäisches Patentamt**

**European Patent Office**

**Office européen des brevets**

(19)

(11) Veröffentlichungsnummer: **0 249 947**
**B1**

(12)
# EUROPÄISCHE PATENTSCHRIFT

(45) Veröffentlichungstag der Patentschrift:
26.09.90

(21) Anmeldenummer: 87108661.7

(22) Anmeldetag: 16.06.87

(51) Int. Cl.⁵: **B23K 11/08, B23K 31/02,**
**B21C 37/08**

(54) **Vorrichtung zum Herstellen von längsnahtgeschweissten Rohren aus einem Blechband.**

(30) Priorität: 20.06.86 DE 3620802

(43) Veröffentlichungstag der Anmeldung:
23.12.87 Patentblatt 87/52

(45) Bekanntmachung des Hinweises auf die Patenterteilung:
26.09.90 Patentblatt 90/39

(84) Benannte Vertragsstaaten:
AT BE CH DE ES FR GB GR IT LI LU NL SE

(56) Entgegenhaltungen:
DE-A- 1 957 834
DE-C- 600 688
DE-C- 609 728
US-A- 2 613 303
US-A- 4 319 475

(73) Patentinhaber: Schoeller Werk GmbH & Co KG,
Postfach 67, D-5374 Hellenthal(DE)

(72) Erfinder: Crome, Rolf, Dipl.-Ing., Im Bongert 15,
D-5374 Hellenthal(DE)

(74) Vertreter: Langmaack, Jürgen, Dipl.-Ing. et al,
Patentanwälte Maxton . Maxton . Langmaack
Goltsteinstrasse 93 Postfach 51 08 06,
D-5000 Köln 51(DE)

## Beschreibung

Die Erfindung betrifft eine Vorrichtung zum Herstellen von längsnahtgeschweißten Rohren aus einem Metallband, mit einer aus mehreren Rollenpaaren gebildeten Formstation zum Erzeugen eines Schlitzrohres aus dem Metallband, mit einer Schweißstation, die ein Schweißrollenpaar und eine nachgeschaltete Entgrateinrichtung aufweist, und mit einer aus wenigstens zwei versetzt zueinander angeordneten Rollenpaaren gebildeten Kalibrierstation für das fertig geschweißte Rohr sowie mit einer am fertigen Rohr angreifenden Zugvorrichtung.

Eine Vorrichtung der vorstehend bezeichneten Art ist beispielsweise aus der DE-A 1 957 834 bekannt. Die Formstation wird bei der vorbekannten Vorrichtung durch Gruppen von Formrollenpaaren gebildet, die jeweils in eigenen Ständern gelagert sind, wobei jeder Ständer wiederum für sich auf einem Maschinenfundament befestigt ist. Ein Nachteil dieser Formstation besteht darin, daß durch die von der Zugvorrichtung über das durchlaufende Rohrmaterial auf die einzelnen Rollengerüste in Materialdurchlaufrichtung wirkenden Kräfte auf jedes einzelne Rollengerüst ein Kippmoment wirksam wird, dessen Größe abhängig ist von der in jedem Rollegerüst zu leistenden Verformungsarbeit. Da es nicht möglich ist, die einzelnen Rollengerüste absolut starr mit dem Maschinenfundament zu verbinden, darüber hinaus zumindest im Bereich der Verbindung der Rollengerüste mit dem Maschinenfundament Elastizitäten vorhanden sind, wird jedes Rollengerüst mehr oder weniger aus der Vertikalen in Durchzugrichtung ausgelenkt. Da nun beim Durchlauf des Metallbandes die Verformungsbedingungen nicht absolut konstant sind und damit auch die Kippmomente an den jeweiligen Rollengerüsten in ihrer Größe variieren, kann es insbesondere bei kontinuierlichen Schweißverfahren mit hohen Durchzugsgeschwindigkeiten für das Material zu Kippschwingungen der Rollengerüste führen, was sich unmittelbar nachteilig auf die Qualität und die Präzision der zu erzeugenden Rohre auswirkt.

Bei der Vorrichtung gemäß US-A 2 613 303 sind alle Rollen der Vorrichtung in einem geschlossenen Kastenträger jeweils auf Einzelböcken gelagert.

Die Formrollen unterliegen einem Verschleiß und müssen in entsprechenden Zeitintervallen gegen nachgearbeitete bzw. neue Formrollen ausgetauscht werden. Hier zeigt sich ein weiterer erheblicher Nachteil der vorbekannten Vorrichtungen. Die Formrollen müssen entweder einzeln aus den Rollengerüsten herausgenommen und durch neue ersetzt werden, oder aber es werden die einzelnen Rollengerüste bzw. Einzelblöcke ausgetauscht. Nach dem Austausch müssen alle Rollen innerhalb eines Rollengerüstes in ihrer Einstellung zueinander ebenso wie alle Rollengerüste in ihrer Ausrichtung zueinander neu justiert werden.

Dies ist mit einem erheblichen Arbeits- und Zeitaufwand verbunden, der einen Stillstand und damit einen Produktionsausfall von ein bis zwei Tagen zur Folge hat. Diese Nachteile werden auch dann wirksam, wenn die Vorrichtung auf eine andere Rohrabmessung umgestellt werden soll, da hier die Formstation vollständig umgerüstet werden muß, weil die Formrollen immer nur für eine Blechstärke und einen Rohrdurchmesser ausgelegt sind. Das hat zur Folge, daß mit einer derartigen Vorrichtung nur sehr grosse Fertigungslängen wirtschaftlich herstellbar sind. Längen von nur wenigen hundert Metern können mit der vorbekannten Vorrichtung wegen der unverhältnismäßig langen Umrüstzeiten wirtschaftlich nicht hergestellt werden.

Die gleichen Nachteile treten bei dieser Vorrichtung zumindest auch für die aus wenigstens zwei versetzt zueinander angeordneten Rollenpaare der hinter der Schweißstation angeordneten Kalibrierstation auf. Je nach Ausbildung der Schweißstation kann dies auch für die Rollelektroden in der Schweißstation gelten.

Der Erfindung liegt nun die Aufgabe zugrunde, eine Vorrichtung der eingangs bezeichneten Art so zu verbessern, daß die vorstehend geschilderten Nachteile vermieden werden, insbesondere aber kürzere Umrüstzeiten anfallen, so daß verschlissene Rollen schneller ausgewechselt werden können und/oder Änderungen in den Abmessungen der herzustellenden Rohre einfacher sind, so daß auch kurze Fertigungslängen noch wirtschaftlich hergestellt werden können.

Diese Aufgabe wird gemäß der Erfindung dadurch gelöst, daß in den Rollenpaare aufweisenden Stationen, wenigstens in der Formstation, alle Rollenpaare in einem am Maschinengestell lösbar befestigen, kastenartigen Längsrahmen gelagert sind, der in seinem Querschnitt im wesentlichen symmetrisch zur Durchlaufachse des Metallbandes ausgebildet ist, und daß der Längsrahmen durch wenigstens zwei parallele, fest miteinander verbundene Längsträger gebildet wird, daß die einzelnen Rollen jeweils auf einer Achse loselaufend gelagert sind, daß die Achsen lösbar mit den Längsträgern verbunden sind und daß wenigstens ein Teil der Achsen zugleich als Aussteifung des Längsrahmens mit den Längsträgern verspannbar ausgebildet ist. Hierdurch werden nicht nur alle Kippmomente im Bereich der einzelnen Formrollenpaare vermieden, da die durch das Material in Längsrichtung wirksam werdenden Kräfte, bezogen auf den Rahmenquerschnitt, symmetrisch aufgenommen und in Längsrichtung entsprechend abgefangen werden können, sondern hierdurch ist darüber hinaus eine vollständig auswechselbare Formstation geschaffen worden. Sind nun nach entsprechender Betriebszeit die Formrollen soweit verschlissen, daß dies mit Rücksicht auf die Präzision des herzustellenden Rohres durch ein Nachstellen nicht mehr ausgeglichen werden kann, so wird die Formstation als komplettes Bauteil vom Maschinengestell gelöst und ausgewechselt. Die mit neuen Rollen versehene, neu einzusetzende Formstation kann hierbei bereits in der Werkstatt vorjustiert werden, so daß innerhalb kürzester Zeit die Fertigung wieder aufgenommen werden kann. Die besonderen Vorteile der erfindungsgemäßen Lösung zeigen sich aber bei einem Wechsel in der Abmessung der zu fertigenden Rohre. Hierzu wird im Einlaufbereich das Metallband und im Bereich der Schweißstation das Material abgeschnitten.

Zum Auswechseln wird nun die Formstation komplett mit dem darin befindlichen Materialrest abgenommen und durch eine Formstation einer anderen Rohrabmessung ausgewechselt, in der wiederum vom vorausgegangenen Fertigungsprozeß ein Materialrest gehalten ist. Nachdem die Formstation fest mit dem Maschinenelement verbunden ist, wird einlaufseitig an den in der Formstation verbliebenen Rest das Metallband der neuen Abmessung angeschweißt und an dem fertigen Rohrstück ein Zugrohr gleicher Abmessung angeschweißt, so daß mit Hilfe der hieran angreifenden Zugvorrichtung über den in der eingewechselten Formstation verbliebenen Materialrest der Bandanfang des neuen Metallbandes hindurchgezogen wird. Sobald der Bandanfang durchgezogen ist, braucht praktisch nur noch die Schweißstation nachjustiert und die ebenfalls ausgewechselte Kalibrieistation nachjustiert zu werden. Damit ist es möglich geworden, die Vorrichtung in weniger als einer Stunde umzurüsten, so daß aufgrund der hierdurch bedingten kurzen Betriebsunterbrechung auch geringe Fertigungslängen unterschiedlicher Abmessungen noch wirtschaftlich herstellbar sind.

Dadurch, daß die Rollen lose auf den Achsen laufend gelagert sind, ist es möglich, die Achsen als tragendes Element des Längsrahmens auszulegen, so daß hierdurch eine erhebliche Gewichtsersparnis erzielt wird, die insbesondere bei Vorrichtungen zur Herstellung von größeren Rohrdurchmessern, beispielsweise im Bereich von 100 mm Durchmessern, die Handhabung der Formstation beim Auswechseln erleichtert. In besonders vorteilhafter Ausgestaltung der Erfindung ist hierbei vorgesehen, daß der Längsrahmen durch vier an den Enden fest miteinander verbundene Längsträger gebildet wird, die jeweils mit Achsen der Formrollen verbunden und durch diese gegeneinander ausgesteift sind. Durch diese Lösung erhält der Längsrahmen praktisch die Struktur eines Gitterrahmens, durch den nicht nur eine weitere Gewichtsreduzierung erreicht wird, sondern zugleich auch eine Reduzierung des Bauvolumens erreichbar ist, da, im Querschnitt des Trägers gesehen, die Achsen der Längsträger jeweils in der Fluchtlinie der hintereinanderliegenden Achsen der Rollen verlaufen. Die hohe Eigensteifigkeit dieses Gitterrahmens wird noch dadurch erhöht, daß dieser mit dem Maschinengestell fest verbunden ist. Unabhängig von der jeweiligen konstruktiven Ausbildung des Längsrahmens ist ein besonderer Vorteil dadurch gegeben, daß alle einer derartigen Vorrichtung zugeordneten, auswechselbaren Formstationen so ausgebildet werden können, daß sie die gleichen Anschlußmaße aufweisen, so daß im Bereich der Verbindung zwischen Längsrahmen und Maschinengestell Anschläge, Ausrichtmarken oder dgl. vorgesehen werden können, die bereits beim Einsetzen einer Formstation eine exakte Längsausrichtung der Formstation auf die nachfolgende Schweißstation und Kalibrierstation ermöglichen. Da die Rollen jeweils einzeln auswechselbar sein müssen, beispielsweise um die Rollen nacharbeiten zu können, ist in gleicher Weise unabhängig von dem jeweils gewählten konstruktiven Aufbau des Längsrahmens vorgesehen, daß die Achsen in ihrem Endbereich einen Anlagebund und einen durch den Längsträger hindurchsteckbaren Gewindeansatz aufweisen, so daß die Achsen und die Längsträger über eine entsprechende Spannmutter fest gegeneinander verspannt werden können, gleichwohl zum Auswechseln der Rollen vom Träger gelöst werden können.

Um nun den sogenannten Stich bei jedem Rollenpaar einstellen zu können, ist in Ausgestaltung der Erfindung ferner vorgesehen, daß jeweils bei den einander zugeordneten Rollenpaaren wenigstens eine Achse lösbar und quer zur Rahmenachse verstellbar mit dem Längsrahmen verbunden ist, daß die Enden der Achsen der verstellbaren Rollen jeweils in einem relativ zum Längsträger bewegbaren Lagerbock gehalten sind, der ain Längsträger feststellbar angeordnet ist. Dies hat den Vorteil, daß bei der Überholung einer Formstation bereits in der Werkstatt die Voreinstellung und die Justierung der Rollen vorgenommen werden kann, da durch die Anordnung aller Rollen in einem geschlossenen Längsrahmen sowohl die Ausrichtung der Rollen zueinander als auch die Ausrichtung der Rollen zum Maschinengestell fixiert ist. Hierbei ist es darüber hinaus möglich, bereits in der Werkstatt ein Metallband in die Formstation einzuziehen und die Formrollen so weit einzustellen, daß bereits eine Grundjustierung vorhanden ist. Beim Auswechseln einer überholten Formstation kann diese dann in gleicher Weise ausgewechselt werden, wie dies für einen Abmessungswechsel vorstehend bereits beschrieben ist, so daß in der Vorrichtung selbst nach dem Anschweißen der freien Enden des in der Formstation bereits befindlichen Metallbandes an den zulaufenden Bandvorrat einerseits und an eine Zugstange andererseits nur noch eine Feinjustierung erforderlich ist.

In einer Ausgestaltung der Erfindung ist hierbei vorgesehen, daß der Lagerbock jeweils durch eine am Längsträger gehaltene Schiebebüchse gebildet wird, die über eine in Verstellrichtung ausgerichtete Stützschraube gegen die Rollenkraft am Längsträger abgestützt ist. Der Längsträger selbst kann hierbei mit einer seiner Fläche zugleich als Bezugsebene für die Zustellung des Stichs gewählt werden. Die Zustellung kann hierbei entweder über eine entsprechende Anlagefläche an der Schiebebüchse über einen Maßstab oder über eine mit der Stützschraube verbundene Mikrometerskala und mit der Längsträger verbundenen feststehenden Zeiger vorgenommen werden.

In einer anderen Ausgestaltung der Erfindung ist vorgesehen, daß der Lagerbock jeweils durch eine im Längsträger verdrehund feststellbare Exenterbüchse gebildet wird.

Die vorstehend erläuterten Merkmale von erfindungsgemäßen Ausgestaltungen gelten in gleicher Weise auch für die Ausgestaltung der - in Durchlaufrichtung gesehen - hinter der Schweißstation angeordneten Kalibrierstation für das fertig geschweißte Rohr, die wenigstens zwei um 90° versetzt zueinander angeordnete Rollenpaare aufweist. Die gleichen konstruktiven Merkmale können auch für die Anordnung der Schweißrollen in ·der Schweißstation vorteilhaft verwendet werden. Bei einer Vorrichtung zur Herstellung von längsnahtgeschweißten Rohren mit geringen Durchmessern, beispielsweise in Durchmesserbereichen um 10 mm, kann es zweckmäßig sein, die Rollen der Formstation und die Rollen der Kalibrierstation ggf. auch die dazwischen liegenden Schweißrollen der Schweißstation in einem gemeinsamen Längsrahmen anzuordnen, so daß beim Auswechseln zu Reparaturzwecken oder einem Abmessungswechsel die gesamte Rollenanordnung der Vorrichtung in ganz kurzer Zeit ausgewechselt werden kann.

Die Erfindung wird anhand schematischer Zeichnungen eines Ausführungsbeispieles näher erläutert. Es zeigen

Fig. 1 eine Seitenansicht einer Vorrichtung zum Herstellen von längsnahtgeschweißten Rohren aus einem Metallband,

Fig. 2 einen Vertikalschnitt durch den Längsrahmen nach der Linie II-II in Fig. 1.

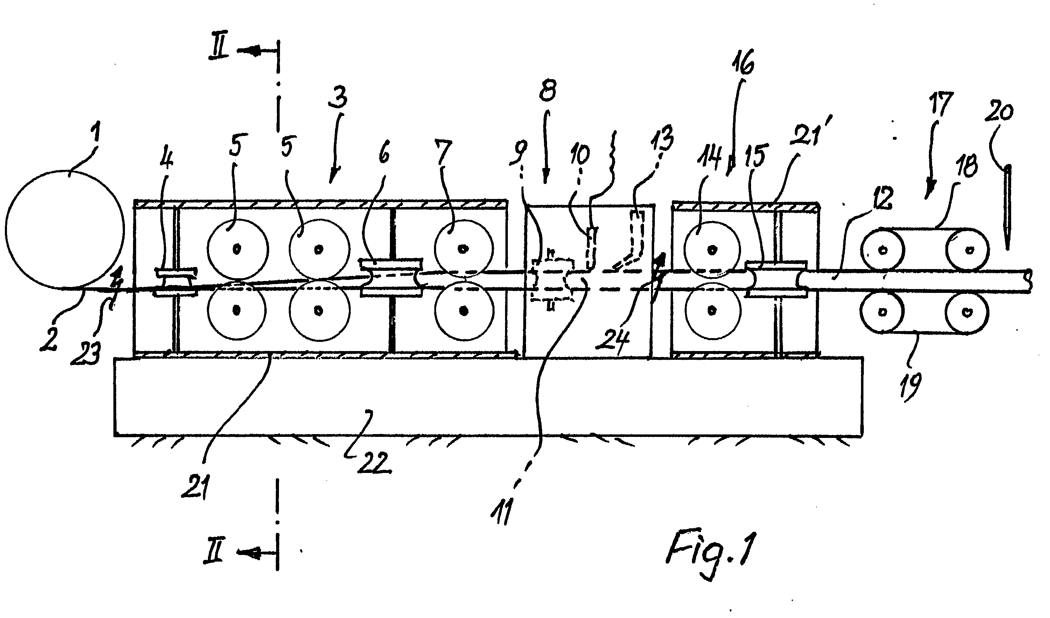

Die in Fig. 1 dargestellte Vorrichtung zur Herstellung von längsnahtgeschweißten Rohren aus einem Blechband besteht im wesentlichen aus einer Lieferspule 1, auf die ein Metallband 2 aufgewickelt ist. Das Metallband 2 wird nun durch eine mit mehreren Formrollen versehene Formstation 3 geführt, in der aus dem flachen Metallband mit Hilfe von mehreren Formrollenpaaren 4, 5, 6 und 7 ein Schlitzrohr hergestellt wird, das dann eine Schweißstation 8 durchläuft, in der es durch ein Schweißrollenpaar 9 gehalten und der Längsschlitz mit Hilfe einer Schweißelektrode 10 zu einer geschlossenen Naht verschweißt wird. Ausbildung und Funktionsweise der Schweißeinrichtung ist bekannt, wobei die Art der Schweißeinrichtung sich nach dem verwendeten Bandmaterial und der gewünschten Qualität richtet. Das nunmehr fertig geschweißte Rohr 11 wird mit Hilfe einer Entgratungseinrichtung 13 entgratet, wobei hier nur das an der Außenwandung angreifende Entgratungsmesser gezeigt ist. Auch der Aufbau und die Funktionsweise der Entgratungsvorrichtung ist bekannt. Nach dem Entgraten durchläuft das entgratete Rohr 12 eine wenigstens zwei um 90° zueinander versetzt angeordnete Rollenpaare 14 und 15 aufweisende Kalibrierstation 16, in der dem Rohr die endgültige Form, beispielsweise eine nahezu exakte Kreisform, gegeben wird.

Über eine Zugvorrichtung 17, die beispielsweise aus zwei das fertige Rohr zwischen sich einklemmenden endlosen Zugraupen 18 und 19 gebildet wird, die mit einem Antrieb in Verbindung stehen, wird der Materialstrang durch die gesamte Anordnung hindurchgezogen, da alle Rollenpaare und zwar die Rollenpaare der Formstation 3, der Schweißstation 8 und der Kalibrierstation 16 lose laufen, d.h. ohne eigenen Antrieb ausgebildet sind. Hinter der Zugvorrichtung 17 ist dann eine Trennvorrichtung 20, beispielsweise in Form einer fliegenden Säge, angeordnet, mit deren Hilfe das fertige Rohr in die gewünschten Teillängen geschnitten wird.

Sobald der Bandvorrat der Lieferspule 1 aufgebraucht ist, wird die Maschine angehalten, bevor das Ende des Metallbandes 2 in die Formstation 3 eingelaufen ist. Der Bandanfang der neuen Lieferspule wird mit dem in der Vorrichtung noch befindlichen Bandende verschweißt, so daß die Vorrichtung nach nur kurzer Unterbrechung weiterarbeiten kann. Es muß lediglich die Teillänge des fertigen Rohres ausgesondert werden, die die Quernaht aufweist.

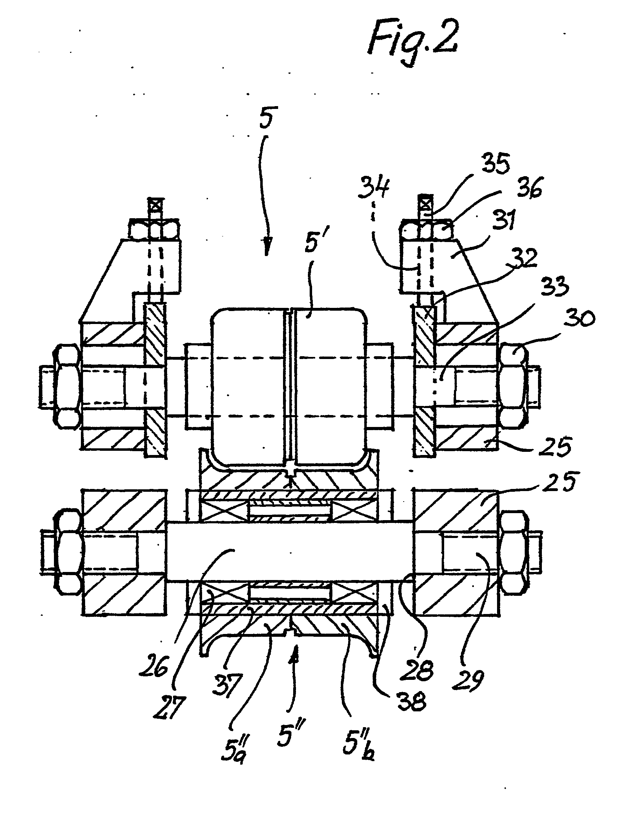

Zumindest die Rollenpaare 4, 5, 6, 7 der Formstation 3 sowie die Rollenpaare 14 und 15 der Kalibrierstation 16 unterliegen im Bereich ihrer Rollenoberflächen, die unmittelbar mit dem Materialband 2 bzw. dem fertigen Rohr in Berührung stehen, einem Verschleiß. Insbesondere bei der Herstellung von Präzisionsrohren ist es daher erforderlich, die formenden Oberflächen der Rollen nach Herstellung einer bestimmten Materiallänge nachzuarbeiten. Hierzu müssen die Rollen gelöst, geschliffen und anschließend wieder montiert werden. Da alle mit dem Materialband 2 im Eingriff stehenden Rollenoberflächen eine ganz bestimmte, nur auf die Herstellung einer Rohrabmessung ausgerichtete geometrische Form aufweisen, ist es ferner erforderlich, zur Herstellung unterschiedlicher Rohrabmessungen auf der Vorrichtung bei jedem Abmessungswechsel alle Rollen der Formstation 3, die Rollelektroden 9 der Schweißstation und auch die Kalibrierrollen der Kalibrierstation auszuwechseln. Um die damit verbundene Stillstandszeit der Vorrichtung auf ein Minimum zu reduzieren, sind die Rollenpaare 4, 5, 6 und 7 der Formstation 3 insgesamt in einem kastenartigen Längsrahmen 21 gelagert, der in seinem Querschnitt im wesentlichen symmetrisch zur Durchlaufachse des Metallbandes 2 ausgebildet ist, wie dies anhand von Fig. 2 noch näher dargestellt werden wird. Der Längsrahmen 21 seinerseits ist hierbei lösbar mit einem Maschinengestell 22 verbunden. Das erlaubt es, sowohl für Reparaturzwecke als auch zum Zwecke eines Abmessungswechsels die Formstation 3 als in sich geschlossenes Maschinenteil nach dem Lösen vom Maschinengestell 22 abzunehmen und durch eine andere, werkstattmäßig überholte Formstation bzw. eine Formstation mit anderen Rollenabmessungen auszutauschen. Zumindest die Kalibrierstation 16 weist hierbei den gleichen konstruktiven Aufbau auf, namlich die Lagerung der Rollenpaare 14 und 15 in einem kastenartigen Längsrahmen 21', der ebenfalls lösbar mit dem Maschinengestell 22 verbunden ist.

Insbesondere bei einem Abmessungswechsel wird nun das Materialband einlaufseitig und im Bereich der Schweißstation an den durch einen Zackenpfeil 23 und 24 gekennzeichneten Stellen durchtrennt. Nach dem Lösen der Schweißrollen 9 in der Schweißvorrichtung 8 wird nunmehr der Längsrahmen 21 der Formstation 3 vom Maschinengestell 22 getrennt und zusammen mit dem darin befindlichen Materialbandstück gegen eine Formstation für die neue Abmessung ausgetauscht. Auch die eingewechselte neue Fomstation ist vom vorherigen Wechseln noch mit einem Materialbandrest versehen bei unveränderter Einstellung der Formrollen. Im Einlaufbereich wird das Anfangsende der Lieferspule mit dem Materialbandrest verschweißt und im Auslaufbereich wird ein Zugrohr am Rohrende verschweißt, das dann in die Zugvorrichtung 17 eingelegt wird. Sodann wird das Materialband durch die Vorrichtung gezogen, so daß die Fertigung einer neuen Rohrabmessung nach nur kurzem Stillstand wieder anlaufen kann.

Die von der Zugvorrichtung 17 auf das Materialband ausgeübte Längskraft wird nun von allen Rollen symmetrisch und kippmomentenfrei über die Längsrahmen aufgenommen und in das Maschinengestell abgeleitet. Hierbei können am Maschinengestell Stützflächen vorgesehen sein, die die Längskräfte der einzelnen Längsrahmen auch stirnseitig aufnehmen. Diese Stützflächen sind jedoch hier nicht dargestellt.

Der Querschnitt gemäß Fig. 2 zeigt den prinzipiellen Aufbau einer speziellen Ausführungsform des Längsrahmens sowie die Ausbildung der Rollenlagerung. Der in Fig. 1 angedeutete Längsrahmen 21 wird duch parallele Längsträger 25 gebildet, die jeweils im Bereich der Rollenpaare, hier der Rollenpaare 4 und 5, fest miteinander verbunden sind. Die Rollenpaare sind hierbei jeweils auf Achsen 26 über Lager 27 lose laufend gelagert. Die Achsen 26 weisen hierbei in ihren Endbereichen jeweils einen Bund 28 auf, mit dem sie an den Längsträgern 25 anliegen. Im Endbereich sind die Achsen mit einem Gewindeansatz 29 versehen, der durch eine entsprechende Bohrung im Längsträger 25 hindurchgesteckt ist, so daß die Längsträger mit Hilfe von Schraubmuttern 30 über die Achsen 26 untereinander verspannt werden können. Da zumindest ein Teil der in Durchlaufrichtung aufeinanderfolgenden Rollenpaare jeweils um 90° versetzt zueinander ausgerichtet sind, ergibt sich somit für den Längsrahmen insgesamt ein Aufbau nach Art eines Gitterträgers, der eine hohe Eigensteifigkeit besitzt.

Da nun der sogenannte Stich zwischen den einzelnen Rollenpaaren einstellbar sein muß, insbesondere um innerhalb eines vorgegebenen Toleranzbereichs einen Verschleiß der Formoberflächen der Rollen ausgleichen zu können, muß mindestens eine der Rollen eines Rollenpaares quer zur Durchlaufrichtung verschiebbar sein. Bei dem in Fig. 2 dargestellten Ausführungsbeispiel ist für das Rollenpaar 5 die untere Rolle 5″ unverschiebbar mit den Längsträgern 25 verbunden, während die obere Rolle 5′ verschiebbar gelagert ist. Hierzu sind die beiden durch die Achse 26 miteinander verbundenen Längsträger 25 jeweils mit einem Lagerbock 31 versehen, in dem eine Schiebebüchse 32 quer zur Längsrichtung verschiebbar gelagert ist und in der in einer Bohrung ein Ansatz 33 der Achse gehalten ist. In diesem Bereich weist der Längsträger 25 ein entsprechendes Langloch zur Aufnahme des Gewindeendes 29 der Achse 26 auf.

Der Lagerbock 31 ist seinerseits mit einer quer zur Ausrichtung der Achse 26 ausgerichteten Gewindebohrung 34 versehen, in der eine Stützschraube 35 gehalten ist, auf der sich die Schiebebüchse 32 abstützt. Über die Stützschraube 35 kann nun der Stich der Oberrolle 5′ in bezug auf die Unterrolle 5″ eingestellt werden. Die Stützschraube 35 wird dann durch eine Kontermutter 36 am Lagerbock 31 festgelegt. Nach erfolgter Einstellung wird dann die Achse 26 über die Muttern 30 fest mit den Längsträgern 25 verspannt, so daß zusätzlich zu der Abstützung durch die Stützschraube 34 die Schiebebüchse 32 am Längsträger 25 geklemmt wird.

Wie aus Fig. 2 ferner ersichtlich, können die Formrollen geteilt ausgebildet sein, wie dies aus dem Teilschnitt für die Unterrolle 5″ ersichtlich ist. Die beiden Rollenhälften 5″a und 5″b sind hierbei auf eine Traghülse 37 aufgeschoben und von beiden Seiten über je einen Druckring 38 und eine Spannmutter fest auf die Achse 26 aufgespannt.

Anstelle der in Fig. 2 beschriebenen Verstellbarkeit der Oberrolle 5′ mit Hilfe eines Lagerbocks und einer Schiebebüchse kann dies auch über eine Exzenterbüchse erfolgen. Hierzu ist es lediglich erforderlich, anstelle der Schiebebüchse 32 eine Exzenterbüchse vorzusehen, in der die Enden der Achse 26 gehalten sind und die ihrerseits in einer entsprechenden, exzentrisch zur Achse 26 im Längsträger 25 angeordneten Bohrung gehalten ist. Die Exzenterbüchse weist jeweils auf ihrer der Rolle zugekehrten Seite einen Anlagebund auf, so daß nach dem Einstellen des Stichs durch Verdrehen der Exzenterbüchse über die Spannschrauben 30 der Achsen die Exzenterbüchse mit ihrem Bund gegen den Längsträger 25 gepreßt und damit geklemmt wird.

Zweckmäßigerweise sind die Aufnahmebüchsen (Schiebebüchse 32 oder Exzenterbüchse) für die Achse 26 auch so auslegbar, daß zum Wechseln einzelner Rollen die Achsen nach dem Lösen der Verbindung zwischen Rolle und Achse nach Art einer Steckachse vollständig seitlich herausgezogen werden können.

**Patentansprüche**

1. Vorrichtung zum Herstellen von längsnahtgeschweißten Rohren aus einem Metallband, mit einer aus mehreren Rollenpaaren (4–7) gebildeten Formstationen (3) zum Erzeugen eines Schlitzrohres aus dem Metallband (2), mit einer Schweißstation (8), die ein Schweißrollenpaar (9) und eine nachgeschaltete Entgratungseinrichtung (13) aufweist, und mit einer aus wenigstens zwei versetzt zueinander angeordneten Rollenpaaren (14, 15) gebildeten Kalibrierstation (16) für das fertig geschweißte Rohr (11) sowie mit einer am fertigen Rohr angreifenden Zugvorrichtung (17), dadurch gekennzeichnet, daß in den Rollenpaare aufweisenden Stationen, wenigstens in der Formstation (3), alle Rollenpaare (4, 5, 6, 7) in einem an einem Maschinengestell (22) lösbar befestigten, kastenartigen Längsrahmen (21) gelagert sind, der in seinem Querschnitt im wesentlichen symmetrisch zur Durchlaufachse des Metallbandes (2) ausgebildet ist, und daß der Längsrahmen (21) durch wenigstens zwei parallele, fest miteinander verbundene Längsträger (25) gebildet wird, daß die einzelnen Rollen (4, 5, 6, 7) jeweils auf einer Achse (26) loselaufend gelagert sind, daß die Achsen (26) lösbar mit dem Längsträger (25) verbunden sind und daß wenigstens ein Teil der Achsen (26) zugleich als Aussteifung des Längsrahmens (21) mit den Längsträgern (25) verspannbar ausgebildet sind.

2. Vorrichtung nach Anspruch 1, dadurch gekennzeichnet, daß der Längsrahmen (21) durch vier an den Enden fest miteinander verbundenen Längsträgern (25) gebildet wird, von denen jeweils zwei mit den Achsen (26) der Rollen (4, 5, 6, 7) verbunden und durch diese gegeneinander aussteifend verspannbar sind.

3. Vorrichtung nach einem der Ansprüche 1 oder 2, bei der jeweils bei den einander zugeordneten Rollenpaaren (4, 5, 6, 7) wenigstens eine Achse (26) lösbar und quer zur Rahmenachse verstellbar mit dem Längsrahmen (21) verbunden ist, dadurch gekennzeichnet, daß die Enden der Achsen (26) der verstellbaren Rollen jeweils in einem relativ zum Längsträger (25) bewegbaren Lagerbock gehalten sind, der am Längsträger (25) feststellbar angeordnet ist.

4. Vorrichtung nach Anspruch 3, dadurch gekennzeichnet, daß der Lagerbock jeweils durch eine am Längsträger (25) gehaltene Schiebebüchse (32) gebildet wird, die über eine in Verstellrichtung ausgerichtete Stützschraube (35) gegen die Rollenkraft am Längsträger abgestützt ist.

5. Vorrichtung nach Anspruch 3, dadurch gekennzeichnet, daß der Lagerbock jeweils durch eine im Längsträger verdreh- und feststellbare Exzenterbüchse gebildet wird.

**Revendications**

1. Dispositif pour fabriquer des tubes soudés sur la longueur à partir d'une bande de métal, comportant une station de formage (3), formée de plusieurs paires de rouleaux (4–7), pour, à partir de la bande de métal (2), produire un tube fendu, comportant aussi une station de soudage (8) qui présente une paire de rouleaux de soudage (9) et un appareil d'ébavurage (13) monté en aval, et comportant aussi une station de calibrage (16) pour le tube soudé fini (11), formée d'au moins deux paires de rouleaux (14, 15) disposées décalées l'une par rapport à l'autre, ainsi qu'un dispositif de tirage (17) agissant sur le tube fini, caractérisé par le fait que dans les stations présentant des paires de rouleaux, au moins dans la station de formage (3), toutes les paires de rouleaux (4, 5, 6, 7) ont leur portée dans un cadre longitudinal (21), en forme de caisson, qui est fixé, de façon amovible, à un bâti de machine (22) et dont la section est conçue sensiblement symétrique par rapport à l'axe de passage de la bande de métal (2); et par le fait que le cadre longitudinal (21) est formé par au moins deux longerons parallèles (25), solidarisés l'un avec l'autre; par le fait que les différents rouleaux (4, 5, 6, 7) sont respectivement portés, en rotation libre, sur un axe (26); que les axes (26) sont reliés, de façon amovible, au longeron (25); et par le fait qu'au moins une partie des axes (26) sont en même temps conçus comme pouvant être contraints avec les longerons (25) en tant que raidisseurs du cadre longitudinal (21).

2. Dispositif selon la revendication 1, caractérisé par le fait que le cadre longitudinal (21) est formé par quatre longerons qui sont solidarisés les uns avec les autres aux extrémités et dont respectivement deux sont reliés avec les axes (26) des rouleaux (4, 5, 6, 7) et peuvent être contraints mutuellement par ceux-ci en jouant un rôle de raidisseurs.

3. Dispositif selon l'une des revendications 1 ou 2, dans lequel respectivement, sur les paires de rouleaux (4, 5, 6, 7) correspondant les unes aux autres, au moins un axe (26) est relié au cadre longitudinal (21) de façon amovible et réglable transversalement à l'axe du cadre, caractérisé par le fait que les extrémités des axes (26) du rouleau réglable sont respectivement maintenues dans un palier qui peut se déplacer par rapport aux longerons (25) et qui est disposé de façon à pouvoir être bloqué sur le longeron (25).

4. Dispositif selon la revendication 3, caractérisé par le fait que le palier est respectivement formé d'un coussinet coulissant qui est maintenu sur le longeron (25) et qui s'appuie sur le longeron, à l'encontre de la force exercée par les rouleaux, par l'intermédiaire d'une vis d'appui (35) orientée dans le sens du réglage.

5. Dispositif selon la revendication 3, caractérisé par le fait que le palier est respectivement formé d'un coussinet excentré qui peut tourner et se bloquer sur le longeron.

**Claims**

1. Device for producing tubes, welded along the longitudinal seam, from a metal strip, with a shaping station (3) formed from a plurality of pairs of rollers (4–7) for producing a split tube from the metal strip (2), with a welding station (8) which has a pair of welding rollers (9) and a succeeding deburring apparatus (13), and with a calibration station (16) formed by at least two pairs of rollers (14, 15) offset relative to each other for the finished welded tube (11) and also with a drawing apparatus (17) engaging the finished tube, characterised in that in the stations having pairs of rollers, at least in the shaping station (3), all the pairs of rollers (4, 5, 6, 7) are mounted in a box-like longitudinal frame (21) detachably fastened to a machine frame (22), the cross-section of which longitudinal frame is designed substantially symmetrically to the passage axis of the metal strip (2), and that the longitudinal frame (21) is formed by at least two parallel longitudinal bars (25) rigidly connected to each other, that the individual rollers (4, 5, 6, 7) are each mounted loose-running on an axle (26), that the axles (26) are detachably connected to the longitudinal bar (25) and that at least part of the axles (26) are at the same time designed to be able to be braced with the longitudinal bars (25) as stiffening for the longitudinal frame (21).

2. Apparatus according to Claim 1, characterised in that the longitudinal frame (21) is formed by four longitudinal bars (25) which are connected rigidly to each other at the ends, of which bars two in each case are connected to the axles (26) of the rollers (4, 5, 6, 7) and are able to be braced against each other in stiffening manner thereby.

3. Apparatus according to one of Claims 1 or 2, in which in each case in the pairs of rollers (4, 5, 6, 7) which are allocated to each other at least one axle (26) is connected to the longitudinal frame (21) detachably and adjustable transversely to the frame axis, characterised in that the ends of the axles (26) of the adjustable rollers are each held in a pedestal movable relative to the longitudinal bar (25), which pedestal is located in lockable manner on the longitudinal bar (25).

4. Apparatus according to Claim 3, characterised in that the pedestal is formed in each case by a sliding bushing (32) held on the longitudinal bar (25), which bushing is supported on the longitudinal bar against the roller force via a carrying bolt (35) aligned in the direction of displacement.

5. Apparatus according to Claim 3, characterised in that the pedestal is formed in each case by an eccentric bushing which can be turned and locked in the longitudinal bar.

Fig.1

EP 0 249 947 B1

EP 0 249 947 B1

*Fig.2*